# NEUE EUROPÄISCHE PATENTSCHRIFT

(11) **EP 0 691 234 B2**
(45) Veröffentlichungstag und Bekanntmachung des Hinweises auf die Entscheidung über den Einspruch: **27.09.2000**
(45) Hinweis auf die Patenterteilung: 04.02.1998
(21) Anmeldenummer: 95109192.5
(22) Anmeldetag: 14.06.1995
(51) Int. Cl.: B60K 17/10, F16H 39/16

(54) **Verfahren und Einrichtung zur Kühlung mindestens einer Fahrpumpe und mindestens eines Fahrmotors eines hydrostatischen Fahrantriebes**
Method and means for cooling off at least a traction pump and at least a traction motor of a hydrostatic drive system
Procédé et dispositif pour refroidir au moins la pompe de traction et au moins le moteur de traction d'un entraînement hydrostatique

(30) Priorität: 09.07.1994 DE 4424315
(43) Veröffentlichungstag der Anmeldung: 10.01.1996
(73) Patentinhaber: O&K ORENSTEIN & KOPPEL AG, 13581 Berlin (DE)
(72) Erfinder: Fengler, Georg, D-59192 Bergkamen (DE); Irrgang, Jürgen, D-44339 Dortmund (DE)
(74) Vertreter: Meinke, Jochen

(56) Entgegenhaltungen:
- DE-A- 3 008 869
- DE-A- 3 539 561
- GB-A- 2 237 621
- Betriebsanleitung, Linde Stapler TYP 350, H12, Ausgabe 1/91, Seiten 62, 63
- Schulungsunterlagen, Service Training, Linde V-Stapler H12/16, TYP 350, Ausgabe 7/91, Seiten 1 bis 15

## Beschreibung

Die Erfindung betrifft ein Verfahren und eine Einrichtung zur Kühlung mindestens einer Fahrpumpe und/oder mindestens eines Fahrmotors eines in geschlossenem Kreislauf betriebenen hydrostatischen Fahrantriebes für mobile Arbeitsmaschinen, insbesondere für Radlader oder dgl. gemäß gattungsbildendem Teil des ersten bzw. vierten Patentanspruches.

Hydrostatische Fahrantriebe für mobile Arbeitsmaschinen, wie beispielsweise Radlader, beinhalten in der Regel eine als Verstellpumpe ausgebildete Fahrpumpe, die von der Antriebsmaschine, in der Regel einem Dieselmotor, angetrieben wird. In geschlossenem Kreislauf wird von der Verstellpumpe ein in der Regel auch als Verstellmotor ausgebildeter Fahrmotor angetrieben. Die Verstelleinrichtung der Verstellpumpe wird üblicherweise mittels einer weiteren Öl aus dem Öltank saugenden Pumpe in Abhängigkeit vorgegebener Parameter verstellt. Zu diesem Zweck sind ebenfalls entsprechende Ventile sowie für die Steuerung notwendige Elemente vorgesehen.

Infolge der in geschlossenem Kreislauf betriebenen Komponenten des hydrostatischen Fahrantriebes, treten hier in Abhängigkeit des jeweiligen Betriebszustandes mehr oder weniger hohe Temperaturen auf, wobei die höchsten Leckölternperaturen am Fahrmotor anfallen.

Bekannt sind sogenannte Gehäusespülungen mittels Speisepumpen, wobei entweder Spülnadeln oder Spülventile zum Einsatz gelangen. Diese Art der Kühlung dient dem Zweck, örtliche Überhitzungen, insbesondere am Fahrmotor, zu vermeiden. Die Speisepumpenmenge wird über einen Wärmetauscher in den Tank geleitet. Die gesamte Wärmebilanz wird dadurch nicht günstig beeinflußt.

Durch die GB-A 2 237 621 ist ein hydrostatisches Getriebe der gattungsgemäßen Art, also ein Verfahren und eine Einrichtung mit den Merkmalen des Oberbegriffs des Patentanspruchs 1 bzw. 4, bekannt, das sehr kompakt baut, wobei aber dennoch eine Überhitzung der wesentlichen Bauteile, wie Drehzapfen, Gleitschuhe oder dgl. vermieden werden soll. Pumpe und Motor haben den gleichen Aufbau. Zur Kühlung des Drehzapfens ist ein eigenes System vorgesehen. Über eine Zahnradpumpe wird kaltes Öl durch einen Saugkanal aus dem Ölsumpf in deren Saugarm gesaugt. Das Öl wird durch eine Förderleitung durch kleine innere Kanäle in den Kühlkreis des Drehzapfens gefördert, wo es einen Teil der Wärme des Drehzapfens aufnimmt. Nachteilig ist hier festzustellen, daß es sich hierbei um Öl aus ein- und demselben hydraulischen Kreis handelt, so daß sich die Gesamtwärmebilanz ungünstisg gestaltet, was letztendlich größere Ölkühler oder dgl. vonnöten macht.

Ziel des Erfindungsgegenstandes ist es, bei Vermeidung örtlicher Überhitzung eine Verbesserung der Wärmebilanz herbeizuführen.

Dieses Ziel wird verfahrensgemäß durch die im Kennzeichen des ersten Patentanspruches angegebenen Merkmale erreicht.

Vorteilhafte Weiterbildungen sind den verfahrensgernäßen Unteransprüchen zu entnehmen.

Dieses Ziel wird desweiteren durch die im Kennzeichen des vierten Patentanspruches genannten Merkmale erreicht.

Ferner ist ein Ölkühler, insbesondere ein mit einem nicht vom Antriebsmotor der Arbeitsmaschine antreibbaren Lüfter ausgerüsteter Ölkühler vorgesehen, der zur Rückkühlung der aus den Gehäusen austretenden zusammengeführten Teilölströme vor dem Öltank angeordnet ist.

Vorzugsweise wird ein Teilölstrom der integrierten Speise- und Steuerdruckpumpe nur zur Spülung des Gehäuses der Fahrpumpe eingesetzt. Die Spülung (Transport der Wärme) des Fahrmotorgehäuses erfolgt vorzugsweise mittels eines separaten externen Ölkreises, vorzugsweise durch eine bereits installierte Pumpe für einen anderen Kreis, z.B. Pumpenspeicherbremspumpe.

Mit der Erfindung werden folgende Vorteile erreicht:
- eine örtliche Überhitzung am Fahrmotor wird vermieden,
- die gesamte Wärmebilanz wird verbessert, d.h. die Rückkühlung über den Wärmetauscher wirksamer, wobei infolge der größeren Rückkühlung sich eine bessere Ölqualität einstellt und/oder ein kleinerer Wärmetauscher zum Einsatz gelangen kann,
- die Lösung ist kostengünstiger, da Spülnadeln oder Spülventile entfallen können,
- die Temperaturdifferenz vom direkt aus dem Tank bezogenen Spülöl, der bekanntermaßen das geringste Temperatumiveau aufweist und das Fahrmotorgehäuseöl, das die höchste Temperatur aufweist, ergibt den optimalen Wärmetransport.

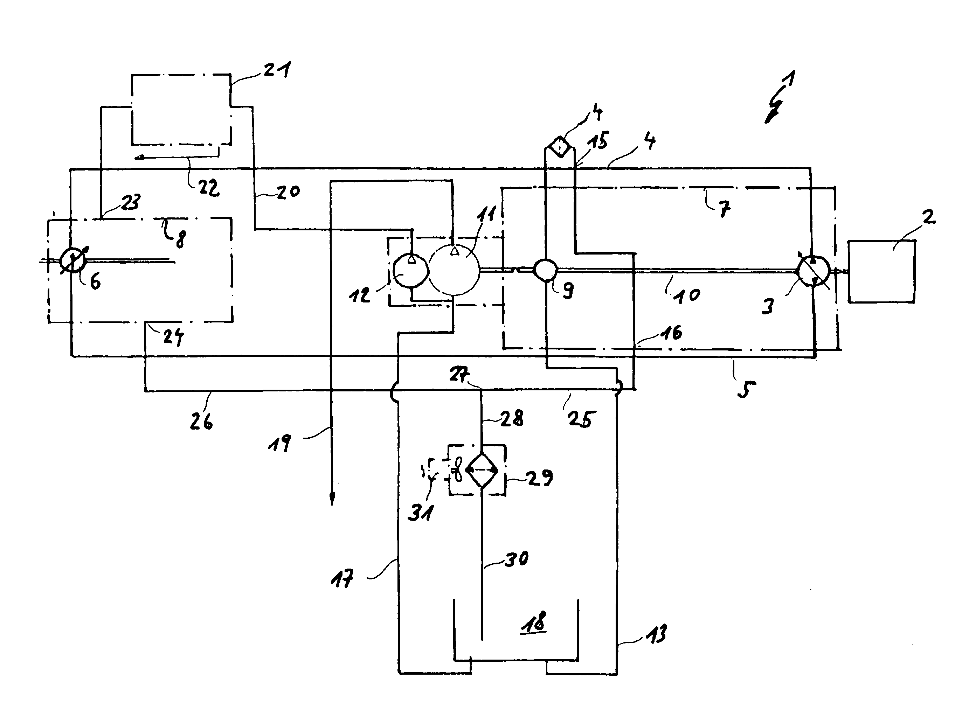

Die Erfindung ist anhand eines Ausführungsbeispieles in der Zeichnung dargestellt und wird wie folgt beschrieben.

Die einzige Figur zeigt ein Schaltschema eines Hydraulikkreislaufes, der u.a. einen hydrostatischen Fahrantrieb 1 beinhaltet. Ein Dieselmotor 2 treibt in diesem Beispiel lediglich eine als Verstellpumpe ausgbildete Fahrpumpe 3 an, die über die Leitungen 4,5 einen ebenfalls als Verstellmotor ausgebildeten Fahrmotor 6 antreibt. Das Gehäuse der Fahrpumpe 3 ist hierbei gestrichelt mit der Nummer 7 dargestellt. Gleiches gilt für das Gehäuse 8 des Fahrmotors 6. In die Fahrpumpe 3 integriert ist eine Speise- und Steuerdruckpumpe 9. Im gleichen Antriebsstrang 10 ist eine Arbeitspumpe 11 sowie eine Pumpenspeicherbremspumpe 12 angeordnet. Infolge der im geschlossenen Kreislauf umgewälzten Ölmenge kommt es im Bereich der Fahrpumpe 3 sowie des Fahrmotors 6 zu örtlichen Überhitzungen, die durch separate Ölkreisläufe abgebaut werden müssen. Über die Saugleitung 13 saugt die Speise- und Steuerdruckpumpe 9 Öl an, das über einen Filter 14 geführt wird, ehe es im Bereich 15 in das Gehäuse 7 der Fahrpumpe 3 eintritt. Im Bereich 16 verläßt das nunmehr ein höheres Temperaturniveau aufweisende Öl das Gehäuse 7. Über die Saugleitung 17 wird Öl aus dem Öltank 18 angesaugt und in Parallelschaltung einerseits der Arbeitspumpe 11 und andererseits der Pumpenspeicherbremspumpe 12 zur Verfügung gestellt. Das durch die Pumpe 11 angesaugte Hydraulikmedium wird in Pfeilrichtung über die Leitung 19 der hier nicht weiter dargestellten Arbeitshydraulik zur Verfügung gestellt. Die Pumpspeicherbremspumpe 12 fördert das ihr zur Verfügung gestellte Medium über die Leitung 20 zu einem nachgeschalteten Speicherladeventil 21. Die Aufladung des Speicheriadeventils 21 benötigt nur einen verhältnismäßig kurzen Zeitraum, so daß die hier gespeicherte Energie in Pfeilrichtung über die Leitung 22 den Bremsventilen (nicht dargestellt) zur Verfügung gestellt werden kann. Da die Aufladung des Speicherladeventils 21 nicht kontinuierlich durchgeführt werden muß, zumal sich die Arbeitsmaschine nicht ständig im Bremsvorgang sich befindet, wird der seitens der Pumpenspeicherbremspumpe 12 geförderte Ölstrom mehr oder weniger unmittelbar an der Stelle 23 in das Gehäuse 8 des Fahrmotors 6 eintreten und die hier vorhandene Wärme abbauen sowie an der Stelle 24 aus dem Gehäuse 8 austreten. Die die Gehäuse 7,8 über die Leitungen 25,26 verlassenden Ölströme werden an der Stelle 27 zu einer gemeinsamen Förderleitung 28 zusammengeführt und über einen Ölkühler 29 geleitet, ehe sie über die Leitung 30 in den Tank 18 gelangen. Der Ölkühler wird hierbei über einen separat angetriebenen elektrischen Lüfter 31 betätigt.

## Patentansprüche

1. Verfahren zur Kühlung mindestens einer Fahrpumpe (3) und mindestens eines Fahrmotors (6) eines in geschlossenem Kreislauf betriebenen hydrostatischen Fahrantriebes (1) für mobile Arbeitsmaschinen, insbesondere für Radlader oder dgl., indem zur Gehäusespülung der Fahrpumpe (3) und/oder des Fahrmotors (6) zumindest ein Teilölstrom mindestens einer im hydraulischen Gesamtkreislauf der Arbeitsmaschine vorhandenen weiteren Pumpe (9,12) eingesetzt wird, dessen Temperatur vor dessen Eintritt in den Öltank (18) zurückgekühlt wird,
dadurch gekennzeichnet,
dass zur Gehäusespülung der Fahrpumpe (3) ein Teilölstrom der für die Ansteuerung der Fahrpumpe (3) zum Einsatz gelangenden Speise- und Steuerdruckpumpe (9) und zur Gehäusespülung des Fahrmotors (6) zumindest ein Teilölstrom einer im gleichen Antriebsstrang (10) angeordneten Pumpe (12) eines anderen hydraulischen Kreises zum Einsatz gelangt, und dass die die beiden Gehäuse (7,8) verlassenden getrennten Volumenströme zusammengeführt und auf dem Weg zum Öltank über einen Ölkühler (29) geführt werden.

2. Verfahren nach Anspruch 1,
dadurch gekennzeichnet,
dass zur Gehäusespülung des Fahrmotors (6) zumindest ein Teilölstrom der Pumpenspeicherbremspumpe (12) verwendet wird.

3. Verfahren nach den Ansprüchen 1 und 2,
dadurch gekennzeichnet,
dass zumindest ein Teil des Volumenstromes der Pumpenspeicherbremspumpe (12) zunächst einem Speicherladeventil (21) zugeführt wird, ehe er in das Gehäuse (8) des Fahrmotors (6) eintritt.

4. Einrichtung zur Kühlung mindestens einer Fahrpumpe (3) und mindestens eines Fahrmotors (6) eines in geschlossenem Kreislauf betriebenen hydrostatischen Fahrantriebes (1) für mobile Arbeitsmaschinen, insbesondere für Radlader oder dgl., mit mindestens einer im hydraulischen Gesamtkreis vorgesehenen Pumpe (9,12), die zur Abgabe zumindest eines Teilölstromes über eine Versorgungsleitung (20) an das Gehäuse (7,8) der Fahrpumpe (3) und/oder des Fahrmotors (6) angeschlossen ist,
dadurch gekennzeichnet,
dass zur Gehäusespülung der Fahrpumpe (3) eine Pumpe (9) und zur Gehäusespülung des Fahrmotors (6) eine im gleichen Antriebsstrang (10) angeordnete Pumpe (12) vorgesehen sind, wobei die Pumpe (12) in einem anderen hydraulischen Kreis als die Fahrpumpe (3) angeordnet ist, und daß die Gehäuse (7,8) der Fahrpumpe (3) und des Fahrmotors (6) über die Pumpen (9) bzw. (12) mit ein geringes Temperaturniveau aufweisendem Öl aus einem Öltank (8) versorgbar sind, wobei ein Ölkühler vorgesehen ist, der zur Rückkühlung der aus den Gehäusen (7,8) austretenden zusammengeführten Teilölströme vor dem Öltank (18) angeordnet ist.

5. Einrichtung nach Anspruch 4,
dadurch gekennzeichnet,
dass der Ölkühler mit einem nicht vom Antriebsmotor (2) der Arbeitsmaschine antreibbaren Lüfter (31) ausgerüstet ist.

## Claims

1. Process for cooling at least one travel pump (3) and at least one travel motor (6) of a hydrostatic travel drive (1), operating in a closed circuit, for mobile work machines, especially for wheel loaders or the like, wherein there is used, for the purpose of washing the housings of the travel pump (3) and of the travel motor (6), at least a partial oil flow from at least one further pump (9,12) present in the overall hydraulic circuit of the work machine, the temperature of which partial oil flow, after passage through the housing, is cooled down again before it enters the oil tank (18),
characterised in
that, for the purpose of washing the housing of the travel pump (3), there is used at least a partial oil flow from a supply and control pump (9) which is used for controlling the travel pump (3) and that, for the purpose of washing the housing of the travel motor (6), there is used at least a partial oil flow from a pump (12) of another hydraulic circuit, whereby the pump (12) is arranged in the same drive unit (10), and that the flows leaving the housings (7,8) are combined and routed via an oil cooler (29) on the way to the oil tank (18).

2. Process according to claim 1,
characterised in
that, for the purpose of washing the housing of the travel motor (6), there is used at least a partial oil flow from a pumped storage brake pump (12).

3. Process according to claims 1 and 2,
characterised in
that at least a portion of the flow from the pumped storage brake pump (12) is supplied first to a storage-loading valve (21) before entering the housing (8) of the travel motors (6).

4. Device for cooling at least one travel pump (3) and at least one travel motor (6) of a hydrostatic travel drive (1), operating in a closed circuit, for mobile work machines, especially for wheel loaders or the like, having at least one pump (9,12) present in the overall hydraulic circuit, which pump (9,12), for the purpose of delivering at least a partial oil flow, is connected to the housings (7,8) of the travel pump (3) and/or of the travel motor (6) via a feed line (20),
characterised in
that, for the purpose of washing the housing of the travel pump (3), a pump (9) is provided and that for the purpose of washing the housing of the travel motor (6) a pump (12) is provided in the same drive unit (10), whereby the pump (12) is arranged in a hydraulic circuit other than that of the travel pump (3) and that the housings (7,8) of the travel pump (3) and of the travel motor (6) can be fed with oil at a low temperature from the oil tank (18), whereby an oil cooler is provided, which oil cooler is arranged upstream of the oil tank (18), for the purpose of cooling down again the combined partial oil flows exiting from the housings (7,8).

5. Device according to claim 4,
characterised in
that the oil cooler is equipped with a fan (31) that is not driven by the drive motor (2) of the work machine.

## Revendications

1. Procédé pour refroidir au moins une pompe de traction (3) et au moins un moteur de traction (6) d'un dispositif hydrostatique d'entraînement en traction (1) fonctionnant en circuit fermé, pour des engins de travail mobiles, notamment pour des chargeurs sur roues ou analogues, grâce au fait que pour le balayage du carter de la pompe de traction (3) et/ou du moteur de traction (6) on utilise au moins un courant partiel d'huile d'au moins une autre pompe (9, 12) présente dans l'ensemble du circuit hydraulique de l'engin de travail, la température de ce courant partiel d'huile étant refroidie en amont de l'entrée dans le réservoir d'huile (18), caractérisé en ce que, pour le balayage du carter de la pompe de traction (3), on utilise un courant partiel d'huile dirigé vers la pompe de traction (3) pour alimenter la pompe d'alimentation et de commande (9), et pour le balayage du carter du moteur de déplacement (6) ou utilise au moins un courant partiel d'huile d'une pompe (12) d'un autre circuit hydraulique, pompe disposée dans une même chaîne de traction (10) et en ce que les courants volumiques séparés quittant les deux carters (7, 8) sont réunis et envoyés dans le trajet aboutissant au réservoir d'huile, par l'intermédiaire d'un refroidisseur d'huile (29).

2. Procédé selon la revendication 1, caractérisé en ce que pour le balayage du carter du moteur de traction (6), on utilise au moins un courant partiel d'huile de la pompe (12) de freinage à accumulation à pompe.

3. Procédé selon les revendications 1 et 2, caractérisé en ce qu'au moins une partie du courant volumique de la pompe (12) de frein à accumulation à pompe est envoyée tout d'abord à une soupape de charge d'accumulation (21), avant de pénétrer dans le carter (8) du moteur de traction (6).

4. Dispositif pour refroidir au moins une pompe de traction (3) et au moins un moteur de traction (6) d'un dispositif d'entraînement hydrostatique (1) fonctionnant en circuit fermé, pour des engins de travail mobiles, notamment pour des chargeurs sur roues ou analogues, comportant au moins une pompe (9, 12) prévue dans l'ensemble du circuit hydraulique et qui est raccordée pour la délivrance d'au moins un courant partiel d'huile par l'intermédiaire d'une canalisation d'alimentation (20) au carter (7, 8) de la pompe de traction (3) et/ou du moteur de traction (6), caractérisé en ce que pour le balayage du carter de la pompe de traction (3) une pompe (9) est prévue et pour le balayage du carter du moteur de déplacement (6) est prévue une pompe (12) disposée dans une même chaîne de traction (10), la pompe (12) étant disposée dans un circuit hydraulique autre que celui de la pompe de traction (3) et en ce que les carters (7, 8) de la pompe de traction (3) et du moteur de traction (6) peuvent être alimentés avec une huile possédant un faible niveau de température, à partir du réservoir d'huile (18), un refroidisseur d'huile étant prévu qui est disposé pour envoyer les courants d'huile partiels, qui sont réunis et sortent des carters (7, 8), en amont du réservoir d'huile (18).

5. Dispositif selon la revendication 4 caractérisé en ce que le refroidisseur d'huile est équipé d'un ventilateur (31) qui ne peut pas être entraîné par le moteur d'entraînement (2) de l'engin de travail.
